# EUROPÄISCHE PATENTSCHRIFT

(11) **EP 1 738 106 B1**
(45) Veröffentlichungstag und Bekanntmachung des Hinweises auf die Patenterteilung: **19.09.2007**
(21) Anmeldenummer: 05731925.3
(22) Anmeldetag: 20.04.2005
(51) Int. Cl.: F21S 8/00

(54) **VORRICHTUNG ZUR LICHTMISCHUNG**
LIGHT MIXING DEVICE
DISPOSITIF DE MELANGE DE LUMIERE

(30) Priorität: 21.04.2004 AT 6832004
(43) Veröffentlichungstag der Anmeldung: 03.01.2007
(73) Patentinhaber: Zumtobel Lighting GmbH, 6850 Dornbirn (AT)
(72) Erfinder: HUTER, Johannes, A-6020 Innsbruck (AT)
(74) Vertreter: Weiser, Andreas
(86) Internationale Anmeldenummer: PCT/AT2005/000135
(87) Internationale Veröffentlichungsnummer: WO 2005/103556

(56) Entgegenhaltungen:
- EP-A- 1 152 186
- WO-A-02/066892
- DE-A1- 10 233 768
- DE-U1- 29 923 835

## Beschreibung

Die vorliegende Erfindung betrifft eine Vorrichtung zur Mischung des Lichtes einer räumlich ausgedehnten Hauptlichtquelle und des Lichtes mindestens einer punktförmigen Nebenlichtquelle, insbesondere für Leuchten oder Lampen.

Bekannterweise kann durch Lichtmischung von zwei Lichtquellen unterschiedlicher Lichtfarbe die Lichtfarbe der Mischlichtstrahlung günstig beeinflußt werden. Beispielsweise kann das kalte Licht einer Hauptlichtquelle, z.B. einer Leuchtstofflampe, durch Zumischung von rotfarbenem Licht einer Nebenlichtquelle, z.B. einer Leuchtdiode, zu einem warmen Licht gemischt werden. Durch Mischung von Licht unterschiedlicher spektraler Zusammensetzung kann z.B. ein Mischlicht mit besonders günstigen spektralen Eigenschaften, insbesondere mit besonders günstigen Farbwiedergabeeigenschaften, erzielt werden.

Es ist bekannt, eine solche Lichtmischung dadurch zu bewirken, daß die Hauptlichtquelle und die Nebenlichtquelle möglichst nahe nebeneinander angeordnet werden (WO-A-02/066892).

Nachteilig ist dabei, daß die Lichtquellen nicht beliebig nahe aneinander angeordnet werden können, da Lichtquellenelemente, wie z.B. Glaskolben, eine Begrenzung darstellen oder weil durch die räumliche Nähe der beiden Lichtquellen eine ungünstige wechselseitige thermische Beeinflussung der beiden Lichtquellen erfolgt.

Ein weiterer Nachteil ist, daß die Lichtmischung stets unvollständig ist, insbesondere da keine Mischung von unterschiedlichen winkelabhängigen Lichtabstrahlcharakteristiken der beiden Lichtquellen stattfindet. Dies kann zu farbigen Abbildungen bei Anwendungen zur Beleuchtung von einfärbigen, z.B. weißen, Oberflächen führen.

Weiters ist es bekannt, die Lichtmischung unter Verwendung von zusätzlichen Lichtstreuvorrichtungen zu erzielen, denen das Licht der Hauptlichtquelle und das Licht der Nebenlichtquelle zugeführt wird und wo dann die Lichtmischung erfolgt. Hier ergibt sich das Problem, daß die Energieeffizienz beschränkt ist und üblicherweise unter 50% beträgt. Darüberhinaus nimmt die Lichtstreuvorrichtung ein großes Volumen ein, welches üblicherweise den Raumbedarf der Hauptlichtquelle und der Nebenlichtquelle um ein Vielfaches übersteigt.

Die vorliegende Erfindung setzt sich zum Ziel, eine Vorrichtung zur Lichtmischung zu schaffen, welche die Nachteile und Grenzen der bekannten Lösungen überwindet. Die Erfindung setzt sich insbesondere zum Ziel, eine solche Lichtmischvorrichtung zu schaffen, die ein einfaches Nachrüsten bestehender Lampen und Leuchten ermöglicht.

Dieses Ziel wird mit einer Vorrichtung der eingangs genannten Art erreicht, die sich gemäß der Erfindung dadurch auszeichnet, daß entlang von einer Lichtleitvorrichtung, welche aus mindestens einer Lichtleitwandung besteht, eine Lichtleitung von der Nebenlichtquelle zur Hauptlichtquelle erfolgt, wobei die Lichtmischung an der Hauptlichtquelle stattfindet.

Auf diese Weise wird eine Lichtmischvorrichtung erreicht, welche alle obengenannten Nachteile der bekannten Lösungen überwindet und insbesondere ein besonders einfaches und platzsparendes Nachrüsten bestehender Lampen und Leuchten ermöglicht.

Bevorzugt wird vorgesehen, daß der Abstand der Nebenlichtquelle zur Hauptlichtquelle mindestens das 1-fache, insbesondere mindestens das 2-fache, insbesondere mindestens das 4-fache der minimalen Hauptlichtquellenausdehnung beträgt. Vorteilhafterweise wird damit eine thermische Kopplung zwischen Hauptlichtquelle und Nebenlichtquelle minimiert.

Bevorzugt wird vorgesehen, daß mindestens 25%, insbesondere mindestens 45%, insbesondere mindestens 60% des Lichtstromes der Nebenlichtquelle durch die Lichtleitvorrichtung zur Hauptlichtquelle geleitet wird. Damit kann vorteilhafterweise eine besonders einfache Vorrichtung mit beispielsweise nur einer einzigen Nebenlichtquelle geschaffen werden.

Bevorzugt wird vorgesehen, daß der zur Hauptlichtquelle zugeleitete Lichtstrom der Nebenlichtquelle maximal 30%, insbesondere maximal 15%, insbesondere maximal 8% des Lichtstromes der Hauptlichtquelle beträgt. Damit wird vorteilhafterweise ein Optimum von spektral günstigen Eigenschaften, insbesondere der Farbwiedergabeeigenschaften des Mischlichtes erzielt.

Bevorzugt wird vorgesehen, daß die Lichtmischung an einer zur Hauptlichtquelle zugehörigen teiltransmittierenden lichtstreuenden Oberfläche erfolgt, da dadurch vorteilhafterweise eine besonders einfache und eine besonders effiziente Lichtmischung erzielt wird.

Bevorzugt wird vorgesehen, daß die Hauptlichtquelle eine Leuchtstofflampe ist, und die teiltransmittierende lichtstreuende Oberfläche durch die Fluoreszenzschicht der Leuchtstofflampe gebildet ist. Für die Lichtmischung weist vorteilhafterweise die Fluoreszenzschicht einer Leuchtstofflampe besonders gute Lichtstreueigenschaften bei gleichzeitig besonders kleinen Lichtabsorptionsverlusten auf.

Besonders bevorzugt wird vorgesehen, daß die Hauptlichtquelle durch eine stabförmige Leuchtstofflampe mit linearer Erstreckungsrichtung gebildet ist. Vorteilhafterweise stellt dieser Typ der Leuchtstofflampe eine besonders einfache und kostengünstige Hauptlichtquelle dar.

Besonders bevorzugt wird vorgesehen, daß die Hauptlichtquelle durch eine ringförmige Leuchtstofflampe mit kreis- oder kreisbogenförmiger Erstreckungsrichtung gebildet ist. Vorteilhafterweise kann bei diesem Typ der Leuchtstofflampe die Nebenlichtquelle und die Lichtleitvorrichtung raumsparend innerhalb des Kreisbogens angeordnet werden.

Besonders bevorzugt wird vorgesehen, daß die Hauptlichtquelle durch eine Kompaktleuchtstofflampe gebildet ist, insbesondere wird vorgesehen, daß die Kompaktleuchtstofflampe durch zumindest zwei Teilstücke mit linearer Erstreckungsrichtung, welche zueinander parallel angeordnet sind, gebildet ist. Mit diesem Typ der Leuchtstofflampe wird vorteilhafterweise die Lichtvorrichtung ebenfalls kompakt.

Besonders vorteilhafterweise ist die Kompaktleuchtstofflampe durch mindestens zwei parallele Teilstücke gebildet, da dafür mit nur einer besonders kompakten Lichtleitvorrichtung an beide Teilstücke der Leuchtstofflampe das Licht der Nebenlichtquelle zugeführt werden kann.

Bevorzugt wird vorgesehen, daß zumindest eine Nebenlichtquelle durch mindestens eine Leuchtdiode (LED) gebildet ist. LEDs zeichnen sich durch ihre geringe Ausdehnung, sowie weiters durch die einfache Zugänglichkeit der lichtemittierenden Oberfläche aus. Vorteilhafterweise kann damit die Lichtleitvorrichtung besonders kompakt und besonders effizient ausgebildet werden.

Besonders bevorzugt wird vorgesehen, daß zumindest eine Nebenlichtquelle durch mindestens eine Leuchtdiode mit einer rotfarbenen bis orangefarbenen Lichtabstrahlung gebildet ist; insbesondere wird vorgesehen, daß zumindest eine Nebenlichtquelle durch mindestens eine weitere Leuchtdiode mit einer gelbfarbenen bis grünfarbenen Lichtabstrahlung gebildet ist. Damit können die spektralen Defizite von Leuchtstofflampen im rot-orangen Wellenlängenbereich durch Zumischung ergänzt und korrigiert werden. Vorteilhafterweise kann damit ein warmes Mischlicht erzeugt werden. Durch Zumischung mit mindestens einer weiteren LED mit gelbfarbener bis grünfarbener Lichtabstrahlung wird besonders vorteilhafterweise die Farbwiedergabegüte des Mischlichtes optimiert.

Bevorzugt wird vorgesehen, daß zumindest eine Lichtleitwandung durch eine hochglänzende Oberfläche mit einem Lichtreflexionsgrad größer als 80%, insbesondere größer als 90%, insbesondere größer als 95% gebildet ist. Vorteilhafterweise kann damit eine hocheffiziente Lichtleitvorrichtung besonders kostengünstig, z.B. durch Reflektorblech, realisiert werden.

Bevorzugt wird vorgesehen, daß zumindest eine Lichtleitwandung zumindest teilweise gekrümmt oder geknickt ausgebildet ist, entlang der eine Lichtlenkung von der Nebenlichtquelle zur Hauptlichtquelle durch einseitige Ablenkung erfolgt. Vorteilhafterweise kann damit besonders einfach und effizient eine von der Geraden abweichende Lichtumlenkung der Lichtleitvorrichtung erzielt werden.

Bevorzugt wird vorgesehen, daß zumindest eine Lichtleitvorrichtung durch eine Lichtleitwandung gebildet ist, welche zur Lichtlenkung der von der Hauptlichtquelle abgehenden Mischlichtstrahlung gemäß üblicher Leuchtenkonstruktionsprinzipien ausgebildet ist, sodaß gleichzeitig eine Lichtlenkung der lichtgemischten Strahlung erfolgt. Somit ist vorteilhafterweise eine besonders einfache erfindungsgemäße Vorrichtung geschaffen.

Bevorzugt wird vorgesehen, daß zumindest eine Lichtleitvorrichtung aus zumindest zwei Lichtleitwandungen besteht, zwischen denen die Lichtleitung von der Nebenlichtquelle zur Hauptlichtquelle durch wechselseitige Ablenkung erfolgt; insbesondere wird vorgesehen, daß je zwei Lichtleitwandungen zueinander parallel angeordnet sind. Vorteilhafterweise ist damit die Lichtleitvorrichtung besonders kompakt und effizient.

Bevorzugt wird vorgesehen, daß die Erstreckungsrichtung der Lichtleitwandungen mit der Erstreckungsrichtung der Hauptlichtquelle identisch ist. Damit erfolgt die Lichtmischung zur Hauptlichtquelle besonders gleichmäßig verteilt, wodurch vorteilhafterweise eine besonders gleichmäßige Lichtmischung erzielt werden kann.

Bevorzugt wird vorgesehen, daß Lichtleitwandungen in Form geometrischer Ebenen ausgebildet sind. Vorteilhafterweise können solche Lichtleitwandungen besonders einfach und kostengünstig, z.B. in plattenförmiger Ausführung, realisiert werden.

Eine bevorzugte Dimensionierung der Ausdehnung der Lichtleitvorrichtung sieht vor, daß die Stärke der Lichtleitvorrichtung maximal das 1,5-fache und minimal das 0,75-fache der minimalen Hauptlichtquellenausdehnung beträgt. Dabei wird die Hauptlichtquelle zumindest teilweise von der Lichtleitvorrichtung umfaßt. Zusätzlich zur Einleitung des Lichtes von der Nebenlichtquelle kann damit eine Ausleitung des Mischlichtes erfolgen, wodurch vorteilhafterweise eine besonders einfache erfindungsgemäße Vorrichtung geschaffen ist.

Eine bevorzugte alternative Dimensionierung der Ausdehnung der Lichtleitvorrichtung sieht vor, daß die Stärke der Lichtleitvorrichtung maximal das 3-fache und minimal das 1-fache der Nebenlichtquellenausdehnung beträgt. Dabei wird der Durchmesser bzw. die Breite der' lichtemittierenden Oberflächen der Nebenlichtquelle möglichst kompakt und zur Gänze umfaßt. Vorteilhafterweise wird damit eine besonders kompakte Lichtleitvorrichtung gebildet.

Bevorzugt wird vorgesehen, daß zumindest eine Lichtleitvorrichtung volumenfüllend durch ein transparentes Material mit einem optischen Brechungsindex von größer als 1,4 gebildet ist, und somit totalreflektierende Lichtleitwandungen durch den jeweiligen Luft-Materialübergang gebildet sind. Vorteilhafterweise kann damit eine verlustfreie Lichtleitung erzielt werden.

Eine bevorzugte Ausführung der Lichtleitvorrichtung, bei der vorteilhafterweise besonders wenig Licht der Hauptlichtquelle durch die Lichtleitvorrichtung verloren geht, sieht vor, daß die Lichtleitvorrichtung möglichst kompakt die lichtemittierende Oberfläche,der Nebenlichtquelle erfaßt, insbesondere daß die Lichteintrittfläche der zumindest einen Lichtleitvorrichtung maximal das 4-fache, insbesondere maximal das 2-fache und minimal das 1-fache der lichtemittierenden Oberfläche der Nebenlichtquelle beträgt, und insbesondere wird vorgesehen, daß die Lichtleitvorrichtung stabförmig ist.

Eine bevorzugte Ausführung der Lichtleitvorrichtung, bei der vorteilhafterweise besonders wenig Licht der Hauptlichtquelle durch die Lichtleitvorrichtung verloren geht, sieht vor, daß die Lichtleitvorrichtung an den der Hauptlichtquelle abgewandten Oberflächen zumindest teilweise mit einer reflektierenden Schicht an jenen Stellen belegt oder hinterlegt ist, an denen keine Lichteinkopplung durch die zumindest eine Nebenlichtquelle stattfindet. An diesen Stellen wird das von der Hauptlichtquelle in die Lichtleitvorrichtung eingeleitete Licht zur Hauptlichtquelle zurückreflektiert.

Bevorzugt wird vorgesehen, daß die Lichtkopplung der Nebenlichtquelle und der Hauptlichtquelle an die Lichtleitvorrichtung durch Lichtkoppeleinrichtungen formbündig ausgebildet ist; insbesondere, daß die Lichtkoppeleinrichtungen durch reflektierende Oberflächen gebildet sind. Vorteilhafterweise wird dadurch eine besonders hohe Effizienz der Lichtleitung erzielt.

Die Erfindung wird nachstehend anhand von in den beigeschlossenen Zeichnungen dargestellten Ausführungsbeispielen näher erläutert. In den Zeichnungen zeigt:
Fig. 1 die Vorrichtung der Erfindung schematisch im Schnitt;
die Fig. 2 und 3 beispielhafte Ausführungsformen der Vorrichtung in schematischen Perspektivansichten;
die Fig. 4, 5, 6 und 7 weitere beispielhafte Ausführungsformen in schematischen Schnittansichten; und
die Fig. 8 und 9 noch weitere beispielhafte Ausführungsformen in schematischen Perspektivansichten.

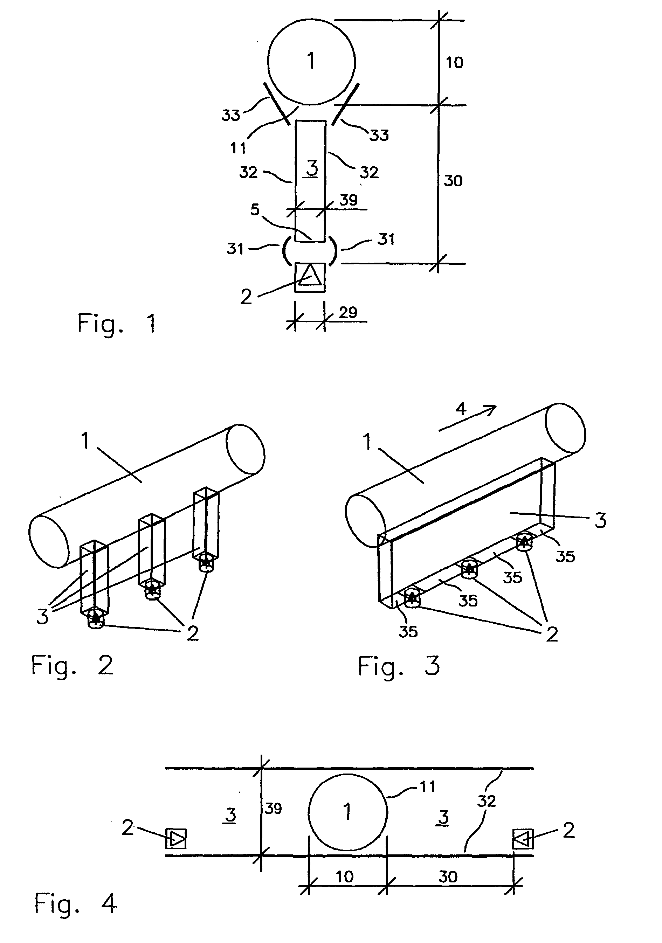

Fig. 1 zeigt schematisch die erfindungsgemäße Vorrichtung mit einer räumlich ausgedehnten Hauptlichtquelle 1, einer punktförmigen Nebenlichtquelle 2 und einer Lichtleitvorrichtung 3. Die Lichtleitvorrichtung besteht zumindest aus einer Lichtleitwandung 32. Jene an die Lichtquellen anschließenden Teile der Lichtleitwandung sind als Lichtkoppeleinrichtungen 31 und 33 bezeichnet.

Die Hauptlichtquelle 1 weist eine teiltransmittierende lichtstreuende Oberfläche 11 auf. Die minimale Hauptlichtquellenausdehnung 10 ergibt sich aus der minimalen Ausdehnung aller Querschnitte der räumlich ausgedehnten Hauptlichtquelle, welche den Lichtschwerpunkt der Hauptlichtquelle beinhalten. Die punktförmige Nebenlichtquelle befindet sich in einem Abstand 30 zur Hauptlichtquelle - dieser Abstand ist durch die minimale Entfernung der punktförmigen Nebenlichtquelle zu allen lichtemittierenden Oberflächenelementen der räumlich ausgedehnten Hauptlichtquelle charakterisiert.

Die Stärke 39 der Lichtleitvorrichtung ist durch die durchschnittliche Ausdehnung der Lichtleitvorrichtung quer zur Lichtleitrichtung und gegebenenfalls quer zur Erstreckungsrichtung der Hauptlichtquelle charakterisiert. Die Lichteintrittsfläche 5 der Lichtleitvorrichtung bezeichnet den Flächengehalt jener der Nebenlichtquelle zugewandten Seite der Lichtleitvorrichtung. Die Nebenlichtquelle ist durch eine (wenn auch kleine) Nebenlichtquellenausdehnung 29 der lichtemittierenden Oberfläche charakterisiert. Damit ist der Durchmesser bzw. die kleinere Seitenlänge der lichtemittierenden Oberfläche der Nebenlichtquelle bezeichnet.

Fig. 2 zeigt eine beispielhafte Ausführung mit einer Hauptlichtquelle 1, beispielsweise einer Leuchtstofflampe, mit drei stabförmigen Lichtleitvorrichtungen 3 und mit drei zugehörigen Nebenlichtquellen 2, beispielsweise Leuchtdioden.

Fig. 3 zeigt eine beispielhafte Ausführung mit einer Hauptlichtquelle 1, beispielsweise einer Leuchtstofflampe mit linearer Erstreckungsrichtung 4. Die Erstreckungsrichtung der gezeigten Lichtleitvorrichtung 3 ist identisch mit der Erstrekkungsrichtung der Leuchtstofflampe, wodurch sich eine plattenförmige Lichtleitvorrichtung ergibt, welche beispielsweise als transparentes Material mit einem optischen Brechungsindex > 1,4 gebildet ist und somit eine verlustfreie Lichtleitung zwischen den totalreflektierenden Oberflächen stattfindet. Die Stärke der gezeigten Lichtleitvorrichtung ist der Ausdehnung der Nebenlichtquellen 2 kompakt angepaßt und weist an Teilen der jenen der Hauptlichtquelle abgewandten Flächen eine reflektierende Schicht 35 auf, wodurch vorteilhafterweise fast kein Licht der Hauptlichtquelle verloren geht.

Fig. 4 zeigt schematisch eine weitere Ausführung bei der die Stärke 39 der Lichtleitvorrichtung der minimalen Hauptlichtquellenausdehnung 10 kompakt angepaßt ist. Damit ist die Lichtleitvorrichtung vorteilhafterweise sowohl zur Einleitung des Lichtes von der Nebenlichtquelle 2 als auch zur Ausleitung des von der Hauptlichtquelle ausgehenden Mischlichtes geeignet.

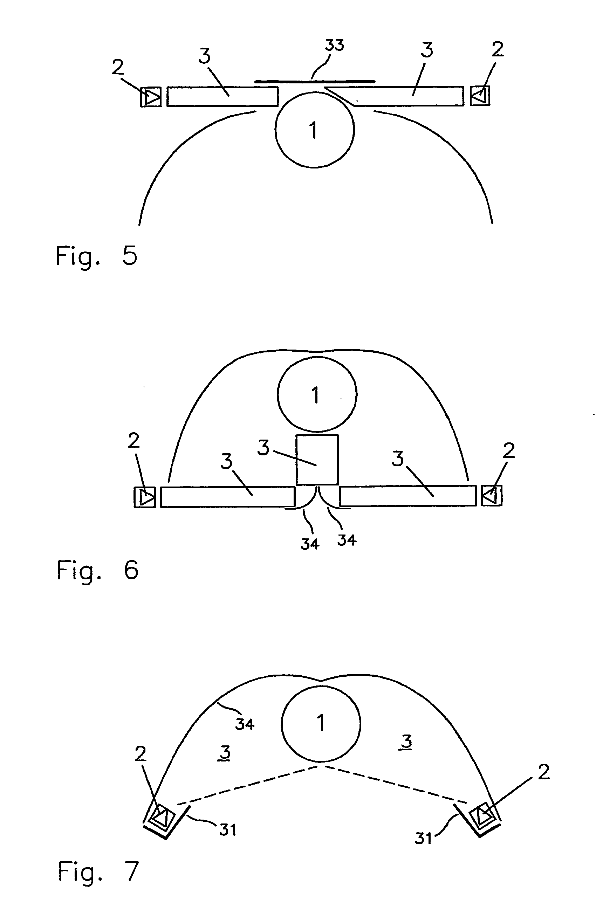

Fig. 5 zeigt eine weitere beispielhafte Ausführung mit einer Hauptlichtquelle 1, zwei Lichtleitvorrichtungen 3 und zwei Nebenlichtquellen 2.

Fig. 6 zeigt eine weitere beispielhafte Ausführung mit reflektierenden gekrümmten Lichtleitwandungen 34, mit denen lichtumlenkende Lichtleitvorrichtungen gebildet sind. Andere Teile der Lichtleitvorrichtung 3 sind beispielsweise aus transparentem Material mit einem optischen Brechungsindex > 1,4 gebildet und dienen so vorteilhafterweise zusätzlich als transparenter mechanischer Leuchtenabschluß.

Fig. 7 zeigt eine weitere beispielhafte Ausführung mit gekrümmten Lichtleitwandungen 34, welche vorteilhafterweise zusätzlich zur kontrollierten Lichtlenkung der von der Hauptlichtquelle abgegebenen Mischlichtstrahlung dienen.

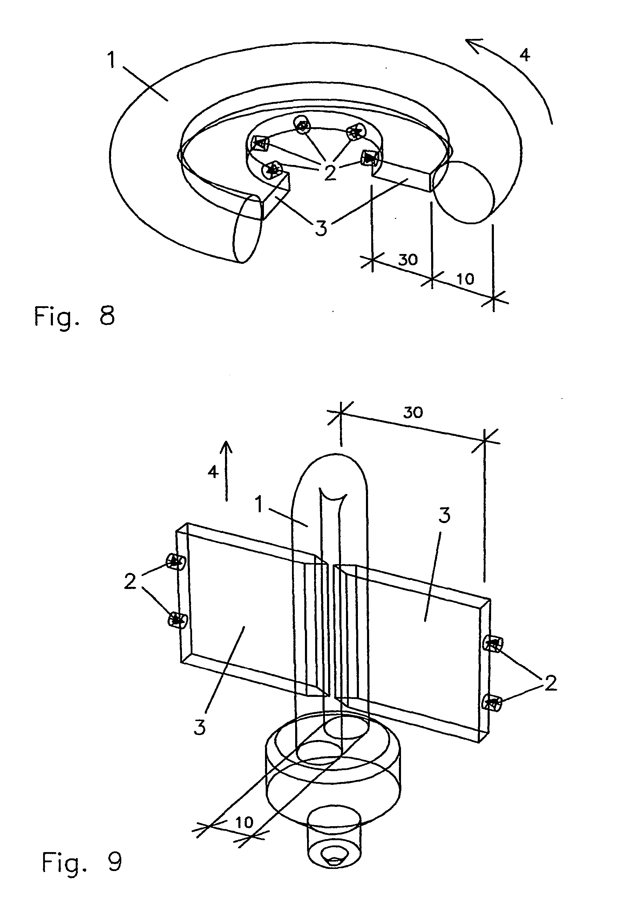

Fig. 8 zeigt eine beispielhafte Ausführung mit einer Leuchtstofflampe mit kreisbogenförmiger Erstreckungsrichtung 4 als Hauptlichtquelle 1. Die Erstreckungsrichtung der gezeigten Lichtleitvorrichtung 3 ist identisch mit der Erstreckungsrichtung der Leuchtstofflampe. Die gezeigte Lichtleitvorrichtung ist plattenförmig ausgebildet und mit den Nebenlichtquellen 2 vorteilhafterweise raumsparend im Kreisbogeninneren angeordnet.

Fig. 9 zeigt eine beispielhafte Ausführung mit einer Kompaktleuchtstofflampe als Hauptlichtquelle 1.

Die Erfindung ist nicht auf die dargestellten Ausführungsbeispieie beschränkt, sondern umfaßt alle Variationen und Modifikationen, die in den Rahmen der beiliegenden Ansprüche fallen.

## Patentansprüche

1. Vorrichtung zur Mischung des Lichtes einer räumlich ausgedehnten Hauptlichtquelle (1) und des Lichtes mindestens einer punktförmigen Nebenlichtquelle (2), **dadurch gekennzeichnet, daß** entlang von einer Lichtleitvorrichtung (3), welche aus mindestens einer Lichtleitwandung (31 - 34) besteht, eine Lichtleitung von der Nebenlichtquelle (2) zur Hauptlichtquelle (1) erfolgt, wobei die Lichtmischung an der Hauptlichtquelle (1) stattfindet.

2. Vorrichtung nach Anspruch 1, **dadurch gekennzeichnet, daß** der Abstand (30) der Nebenlichtquelle (2) zur Hauptlichtquelle (1) mindestens das 1-fache, bevorzugt mindestens das 2-fache, besonders bevorzugt mindestens das 4-fache der minimalen Hauptlichtquellenausdehnung (10) beträgt.

3. Vorrichtung nach Anspruch 1 oder 2, **dadurch gekennzeichnet, daß** mindestens 25%, bevorzugt mindestens 45%, besonders bevorzugt mindestens 60% des Lichtstromes der Nebenlichtquelle (2) durch die Lichtleitvorrichtung (3) zur Hauptlichtquelle (1) geleitet ist.

4. Vorrichtung nach einem der Ansprüche 1 bis 3, **dadurch gekennzeichnet, daß** der zur Hauptlichtquelle (1) geleitete Lichtstrom der Nebenlichtquelle (2) maximal 30%, bevorzugt maximal 15%, besonders bevorzugt maximal 8% des Lichtstromes der Hauptlichtquelle beträgt.

5. Vorrichtung nach einem der Ansprüche 1 bis 4, **dadurch gekennzeichnet, daß** die Lichtmischung an einer zur Hauptlichtquelle (1) zugehörigen teiltransmittierenden lichtstreuenden Oberfläche (11) erfolgt.

6. Vorrichtung nach einem der Ansprüche 1 bis 5, **dadurch gekennzeichnet, daß** die Hauptlichtquelle (1) eine Leuchtstofflampe ist und die teiltransmittierende lichtstreuende Oberfläche (11) durch die Fluoreszenzschicht der Leuchtstofflampe gebildet ist.

7. Vorrichtung nach einem der Ansprüche 1 bis 6, **dadurch gekennzeichnet, daß** die Hauptlichtquelle (1) durch eine stabförmige Leuchtstofflampe mit linearer Erstreckungsrichtung (4) gebildet ist.

8. Vorrichtung nach einem der Ansprüche 1 bis 6, **dadurch gekennzeichnet, daß** die Hauptlichtquelle (1) durch eine ringförmige Leuchtstofflampe mit kreis- oder kreisbogenförmiger Erstreckungsrichtung (4) gebildet ist.

9. Vorrichtung nach einem der Ansprüche 1 bis 6, **dadurch gekennzeichnet, daß** die Hauptlichtquelle (1) durch eine Kompaktleuchtstofflampe gebildet ist, besonders bevorzugt durch eine Kompaktleuchtstofflampe mit zumindest zwei zueinander parallelen Teilstücken mit linearer Erstreckungsrichtung (4).

10. Vorrichtung nach einem der Ansprüche 1 bis 9, **dadurch gekennzeichnet, daß** zumindest eine Nebenlichtquelle (2) durch mindestens eine Leuchtdiode gebildet ist.

11. Vorrichtung nach einem der Ansprüche 1 bis 10, **dadurch gekennzeichnet, daß** zumindest eine Nebenlichtquelle (2) durch mindestens eine Leuchtdiode mit einer rotfarbenen bis orangefarbenen Lichtabstrahlung gebildet ist; bevorzugt daß zumindest eine Nebenlichtquelle (2) durch mindestens eine weitere Leuchtdiode mit einer gelbfarbenen bis grünfarbenen Lichtabstrahlung gebildet ist.

12. Vorrichtung nach einem der Ansprüche 1 bis 11, **dadurch gekennzeichnet, daß** zumindest eine Lichtleitwandung (31 - 34) durch eine hochglänzende Oberfläche mit einem Lichtreflexionsgrad größer als 80%, bevorzugt größer als 90%, besonders bevorzugt größer als 95% gebildet ist.

13. Vorrichtung nach einem der Ansprüche 1 bis 12, **dadurch gekennzeichnet, daß** mindestens eine Lichtleitwandung (34) zumindest teilweise gekrümmt oder geknickt ausgebildet ist, entlang der eine Lichtlenkung von der Nebenlichtquelle (2) zur Hauptlichtquelle (1) durch einseitige Ablenkung erfolgt.

14. Vorrichtung nach einem der Ansprüche 1 bis 13, **dadurch gekennzeichnet, daß** zumindest eine Lichtleitvorrichtung (3) durch eine Lichtleitwandung (34) gebildet ist, welche zur Lichtlenkung der von der Hauptlichtquelle (1) abgehenden Mischlichtstrahlung ausgebildet ist.

15. Vorrichtung nach einem der Ansprüche 1 bis 14, **dadurch gekennzeichnet, daß** mindestens eine Lichtleitvorrichtung (3) aus zumindest zwei Lichtleitwandungen (32) besteht, zwischen denen die Lichtleitung von der Nebenlichtquelle (2) zur Hauptlichtquelle (1) durch wechselseitige Ablenkung erfolgt; wobei bevorzugt je zwei Lichtleitwandungen (32) zueinander parallel angeordnet sind.

16. Vorrichtung nach einem der Ansprüche 1 bis 15, **dadurch gekennzeichnet, daß** die Erstreckungsrichtung der Lichtleitwandungen (32) mit der Erstreckungsrichtung der Hauptlichtquelle (1) identisch ist.

17. Vorrichtung nach einem der Ansprüche 1 bis 16, **dadurch gekennzeichnet, daß** Lichtleitwandungen (32) in Form geometrischer Ebenen ausgebildet sind.

18. Vorrichtung nach einem der Ansprüche 1 bis 17, **dadurch gekennzeichnet, daß** die Stärke (39) der Lichtleitvorrichtung (3) maximal das 1,5-fache und minimal das 0,75-fache der minimalen Hauptlichtquellenausdehnung (10) beträgt.

19. Vorrichtung nach einem der Ansprüche 1 bis 17, **dadurch gekennzeichnet, daß** die Stärke (39) der Lichtleitvorrichtung (3) maximal das 3-fache und minimal das 1-fache der Nebenlichtquellenausdehnung (29) beträgt.

20. Vorrichtung nach einem der Ansprüche 1 bis 19, **dadurch gekennzeichnet, daß** zumindest eine Lichtleitvorrichtung (3) volumenfüllend durch ein transparentes Material mit einem optischen Brechungsindex von größer als 1,4 gebildet ist, wodurch sich totalreflektierende Lichtleitwandungen (32) ergeben.

21. Vorrichtung nach einem der Ansprüche 1 bis 20, **dadurch gekennzeichnet, daß** die Lichteintrittfläche (5) der Lichtleitvorrichtung (3) maximal das 4-fache, bevorzugt maximal das 2-fache und minimal das 1-fache, der lichtemittierenden Oberfläche der Nebenlichtquelle (2) beträgt, wobei bevorzugt die Lichtleitvorrichtung (3) stabförmig ist.

22. Vorrichtung nach einem der Ansprüche 1 bis 21, **dadurch gekennzeichnet, daß** die Lichtleitvorrichtung (3) an den der Hauptlichtquelle (1) abgewandte Oberflächen zumindest teilweise mit einer reflektierenden Schicht (35) an jenen Stellen belegt oder hinterlegt ist, an denen keine Lichteinkopplung durch die Nebenlichtquelle (2) stattfindet.

23. Vorrichtung nach einem der Ansprüche 1 bis 22, **dadurch gekennzeichnet, daß** die Lichtkopplung der Nebenlichtquelle (2) und der Hauptlichtquelle (1) an die Lichtleitvorrichtung (3) durch Lichtkoppeleinrichtungen (31, 33) formbündig ausgebildet ist; wobei bevorzugt die Lichtkoppeleinrichtungen (31, 33) durch reflektierende Oberflächen gebildet sind.

## Claims

1. A device for mixing the light of a spatially extended main light source (1) and the light of at least one punctiform secondary light source (2), **characterized in that** light conduction from said secondary light source (2) to said main light source (1) takes place along a light-guiding element (3), which consists of at least one light-guiding wall (31- 34), and light mixing takes place at the main light source (1).

2. The device according to claim 1, **characterized in that** the distance (30) of said secondary light source (2) from said main light source (1) is at least 1 times, preferably at least 2 times and more preferably at least 4 times the minimum size of said main light source (10).

3. The device according to claim 1 or claim 2, **characterized in that** at least 25 %, preferably at least 45 % and more preferably at least 60 % of the luminous flux of said secondary light source (2) passes through said light-guiding element (3) to said main light source (1).

4. The device according to any one of claims 1 to 3, **characterized in that** the luminous flux of said secondary light source (2) passed to said main light source (1) is not more than 30 %, preferably not more than 15 % and more preferably not more than 8 % of the luminous flux of said main light source.

5. The device according to any one of claims 1 to 4, **characterized in that** light mixing takes place at a partially light-permeable, light-scattering surface (11) assigned to said main source of light (1).

6. The device according to any one of claims 1 to 5, **characterized in that** the main light source (1) is a fluorescent tube and the partially light-permeable, light-scattering surface (11) is formed by the fluorescent layer of said fluorescent tube.

7. The device according to any one of claims 1 to 6, **characterized in that** the main light source (1) is formed by a rod-shaped fluorescent tube with a linear direction of extension (4).

8. The device according to any one of claims 1 to 6, **characterized in that** the main light source (1) is formed by an annular fluorescent tube having a circular or arcuate direction of extension (4).

9. The device according to any one of claims 1 to 6, **characterized in that** the main light source (1) is formed by a compact fluorescent lamp and preferably by a compact fluorescent lamp comprising at least two parallel sections having a linear direction of extension (4).

10. The device according to any one of claims 1 to 9, **characterized in that** at least one secondary light source (2) is formed by at least one light-emitting diode.

11. The device according to any one of claims 1 to 10, **characterized in that** at least one secondary light source (2) is formed by at least one light-emitting diode emitting redcolored to orange-colored light radiation and preferably that at least one secondary light source (2) is formed by at least one further light-emitting diode emitting yellow-colored to green-colored light radiation.

12. The device according to any one of claims 1 to 11, **characterized in that** at least one light-guiding wall (31- 34) is formed by a high-gloss surface having a light reflectance value greater than 80 %, preferably greater than 90 % and more preferably greater than 95 %.

13. The device according to any one of claims 1 to 12, **characterized in that** at least one light-guiding wall (34) is at least partially bent or buckled, along which light conduction from said secondary light source (2) to said main light source (1) is effected by one-sided deflection.

14. The device according to any one of claims 1 to 13, **characterized in that** at least one light-guiding element (3) is formed by a light-guiding wall (34) which is adapted to guide the mixed light radiation emitted by said main light source (1).

15. The device according to any one of claims 1 to 14, **characterized in that** at least one light-guiding element (3) consists of at least two light-guiding walls (32), between which the conduction of light from said secondary light source (2) to said main light source (1) takes place by reciprocal deflection, said pair of light-guiding walls (32) being disposed in parallel relationship.

16. The device according to any one of claims 1 to 15, **characterized in that** the direction of extension of said light-guiding walls (32) is identical with the direction of extension of said main light source (1).

17. The device according to any one of claims 1 to 16, **characterized in that** said light-guiding walls (32) are in the form of geometrical planes.

18. The device according to any one of claims 1 to 17, **characterized in that** the thickness (39) of said light-guiding element (3) is at the most 1.5 times and at the least 0.75 times the minimum expanse of said main light source (10).

19. The device according to any one of claims 1 to 17, **characterized in that** the thickness (39) of said light-guiding element (3) is at the most 3 times and at the least 1 times the expanse of said secondary light source (29).

20. The device according to any one of claims 1 to 19, **characterized in that** at least one light-guiding element (3) is formed by solid transparent material having an optical refractive index of greater than 1.4, whereby totally reflecting light-guiding walls (32) are provided.

21. The device according to any one of claims 1 to 20, **characterized in that** the light incident surface (5) of said light-guiding element (3) is at the most 4 times and preferably at the most 2 times and at the least 1 times the size of the light-emitting surface of said secondary light source (2), the light-guiding element (3) being preferably rod-shaped.

22. The device according to any one of claims 1 to 21, **characterized in that** a reflecting layer (35) is at least partially provided on or behind those surfaces of said light-guiding element (3) which are remote from said main light source (1) at those sites where no light coupling occurs from said secondary light source (2).

23. The device according to any one of claims 1 to 22, **characterized in that** optical coupling of said secondary light source (2) and said main light source (1) to said light-guiding element (3) is effected by optical coupling devices (31, 33) which follow the shape thereof, which optical coupling devices (31, 33) are preferably formed by reflecting surfaces.

## Revendications

1. Dispositif de mélange de lumière d'une source de lumière principale (1) étendue spatialement et de lumière d'au moins une source de lumière secondaire (2) ponctuelle, **caractérisé en ce que** le long d'un dispositif de guidage de la lumière (3) qui est formé d'au moins une paroi de guidage de la lumière (31-34), un guidage de lumière est effectué de la source de lumière secondaire (2) à la source de lumière principale (1), le mélange de lumière ayant lieu sur la source de lumière principale (1).

2. Dispositif selon la revendication 1, **caractérisé en ce que** la distance (30) entre la source de lumière secondaire (2) et la source de lumière principale (1) représente au moins 1 fois, de préférence au moins 2 fois, de façon particulièrement préférée au moins 4 fois l'étendue minimale (10) de la source de lumière principale.

3. Dispositif selon la revendication 1 ou 2, **caractérisé en ce qu'**au moins 25 %, de préférence au moins 45 %, de façon particulièrement préférée au moins 60 % du flux lumineux de la source de lumière secondaire (2) est guidé par le dispositif de guidage de lumière (3) vers la source de lumière principale (1).

4. Dispositif selon l'une quelconque des revendications 1 à 3, **caractérisé en ce que** le flux lumineux guidé vers la source de lumière principale (1) de la source de lumière secondaire (2) représente au maximum 30 %, de préférence au maximum 15 %, de façon particulièrement préférée au maximum 8 % du flux lumineux de la source de lumière principale.

5. Dispositif selon l'une quelconque des revendications 1 à 4, **caractérisé en ce que** le mélange de lumière a lieu sur une surface (11) dispersant la lumière à transmission partielle appartenant à la source de lumière principale (1).

6. Dispositif selon l'une quelconque des revendications 1 à 5, **caractérisé en ce que** la source de lumière principale (1) est un tube fluorescent, et la surface (11) dispersant la lumière à transmission partielle est formée par la couche fluorescente du tube fluorescent.

7. Dispositif selon l'une quelconque des revendications 1 à 6, **caractérisé en ce que** la source de lumière principale (1) est formée par un tube fluorescent en forme de barre avec une direction de projection linéaire (4).

8. Dispositif selon l'une quelconque des revendications 1 à 6, **caractérisé en ce que** la source de lumière principale (1) est formée par un tube fluorescent annulaire avec une direction de projection de forme circulaire ou en arc de cercle (4).

9. Dispositif selon l'une quelconque des revendications 1 à 6, **caractérisé en ce que** la source de lumière principale (1) est formée par un tube fluorescent compact, de façon particulièrement préférée par un tube fluorescent compact avec au moins deux éléments parallèles entre eux avec direction de projection linéaire (4).

10. Dispositif selon l'une quelconque des revendications 1 à 9, **caractérisé en ce qu'**au moins une source de lumière secondaire (2) est formée par au moins une diode électroluminescente.

11. Dispositif selon l'une quelconque des revendications 1 à 10, **caractérisé en ce qu'**au moins une source de lumière secondaire (2) est formée par au moins une diode électroluminescente avec émission lumineuse de couleur rouge à orange ; de préférence **en ce qu'**au moins une source de lumière secondaire (2) est formée par au moins une autre diode électroluminescente avec une émission lumineuse de couleur jaune à verte.

12. Dispositif selon l'une quelconque des revendications 1 à 11, **caractérisé en ce qu'**au moins une paroi de guidage de lumière (31-34) est formée par une surface hautement brillante ayant un degré de réflexion de lumière supérieur à 80 %, de préférence supérieur à 90 %, de façon particulièrement préférée supérieur à 95 %.

13. Dispositif selon l'une quelconque des revendications 1 à 12, **caractérisé en ce qu'**au moins une paroi de guidage de lumière (34) est configurée au moins partiellement incurvée ou coudée, le long de laquelle un guidage de lumière de la source de lumière secondaire (2) à la source de lumière principale (1) a lieu par déviation unilatérale.

14. Dispositif selon l'une quelconque des revendications 1 à 13, **caractérisé en ce qu'**au moins un dispositif de guidage de lumière (3) est formé par une paroi de guidage de lumière (34), qui est configurée en vue du guidage de lumière du rayonnement de lumière de mélange partant de la source de lumière principale (1).

15. Dispositif selon l'une quelconque des revendications 1 à 14, **caractérisé en ce qu'**au moins un dispositif de guidage de lumière (3) est formé d'au moins deux parois de guidage de lumière (32), entre lesquelles le guidage de lumière est effectué de la source de lumière secondaire (2) à la source de lumière principale (1) par déviation mutuelle; respectivement deux parois de guidage de lumière (32) étant disposées de préférence parallèlement l'une à l'autre.

16. Dispositif selon l'une quelconque des revendications 1 à 15, **caractérisé en ce que** la direction de projection des parois de guidage de lumière (32) est identique à la direction de projection de la source de lumière principale (1).

17. Dispositif selon l'une quelconque des revendications 1 à 16, **caractérisé en ce que** les parois de guidage de lumière (32) sont configurées sous la forme de plans géométriques.

18. Dispositif selon l'une des revendications 1 à 17, **caractérisé en ce que** l'intensité (39) du dispositif de guidage de lumière (3) représente au maximum 1,5 fois et au minimum 0,75 fois l'étendue minimale (10) de la source de lumière principale.

19. Dispositif selon l'une quelconque des revendications 1 à 17, **caractérise en ce que** l'intensité (39) du dispositif de guidage de lumière (3) représente au maximum 3 fois et au minimum 1 fois l'étendue de la source de lumière secondaire (29).

20. Dispositif selon l'une quelconque des revendications 1 à 19, **caractérisé en ce qu'**au moins un dispositif de guidage de lumière (3) est formé par remplissage de volume par un matériau transparent ayant un indice de réfraction optique de plus de 1,4, ce qui produit des parois de guidage de lumière (32) totalement réfléchissantes.

21. Dispositif selon l'une quelconque des revendications 1 à 20, **caractérisé en ce que** la surface d'entrée de lumière (5) du dispositif de guidage de lumière (3) représente au maximum 4 fois, de préférence au maximum 2 fois et au minimum 1 fois la surface émettant la lumière de la source de lumière secondaire (2), le dispositif de guidage de lumière (3) étant de préférence en forme de barre.

22. Dispositif selon l'une quelconque des revendications 1 à 21, **caractérisé en ce que** le dispositif de guidage de lumière (3) est garni ou doublé sur les surfaces opposées à la source de lumière principale (1) au moins partiellement avec une couche réfléchissante (35) à ces endroits où aucun couplage de lumière n'a lieu par la source de lumière secondaire (2).

23. Dispositif selon l'une quelconque des revendications 1 à 22, **caractérisé en ce que** le dispositif de couplage de lumière de la source de lumière secondaire (2) et de la source de lumière principale (1) est réalisé par correspondance de forme avec le dispositif de guidage de lumière (3) par des installations de couplage par lumière (31, 33) ; les installations de couplage par lumière (31, 33) étant formées de préférence par des surfaces réfléchissantes.
